# EUROPEAN PATENT APPLICATION

(11) **EP 4 325 091 A1**
(43) Date of publication of application: **21.02.2024**
(21) Application number: 22190954.2
(22) Date of filing: 18.08.2022
(51) Int. Cl.: F16H 57/00

(54) **ASSEMBLY FOR A GEARBOX FOR A WIND TURBINE, ARRANGEMENT, KIT, GEARBOX FOR A WIND TURBINE, METHOD FOR TRANSPORTING AN ASSEMBLY FOR A GEARBOX AND METHOD FOR ASSEMBLING A WIND TURBINE**

(71) Applicant: Nordex Energy SE & Co. KG, 22419 Hamburg (DE); ZF Friedrichshafen AG, 88046 Friedrichshafen (DE)
(72) Inventor: Adler, Florian, 22419 Hamburg (DE); Novakovic, Zoran, 22419 Hamburg (DE); Klaus, Ulrich, 58640 Iserlohn (DE); Markowski, Rüdiger, 58093 Hagen (DE)
(74) Representative: Epping - Hermann - Fischer

(57) **Abstract**

In at least one embodiment, the assembly (10) for a gearbox (11) for a wind turbine comprises a housing element (1), a rotational element (2), a bearing (3), a first connection feature (41) for connecting the housing element to a connection element and a second connection feature (42) for connecting the rotational element to the connection element. The rotational element is arranged rotatably with respect to the housing element by means of the bearing. At least one of the first and the second connection feature is configured to form a movable, form-fitting connection such that, when the housing element and the rotational element are connected to the connection element by means of the first and the second connection feature, a relative axial movement between the rotational element and the housing element is prevented but a relative rotation between the rotational element and the housing element is enabled.

## Description

Wind turbines with wind turbine rotor blades are widely known from the state of the art and are used to convert wind energy into electrical energy. Wind turbines comprise a multitude of components. A gearbox for a wind turbine is usually realized as a planetary gearbox. The planet carrier is rotatably arranged inside a gearbox housing by means of a bearing, e.g. is rotatably supported by the bearing. The bearings, such as cylindrical roller bearings, are usually unsuitable for taking high axial loads. However, during transportation and assembly, the planet carrier is typically subject to loads which tend to axially shift said planet carrier and the bearing inner ring such that the rolling elements of the bearing are axially shifted towards one bearing seat. In operation, the additional shift towards said bearing seat, which may for example be caused by structural deformations, may result in excessively high axial loads on the bearing, which means a reduction of the bearing lifetime and thus of the gearbox lifetime.

One object to be achieved is to provide an improved assembly for a gearbox for a wind turbine, e.g. an assembly which can be transported and/or assembled with a reduced risk of damage and an increased bearing lifetime. Further objects to be achieved are to provide an arrangement with such an assembly, a kit with such an assembly, a gearbox with such an assembly, a method for transporting such an assembly and a method for assembling a wind turbine using such an assembly.

These objects are achieved, inter alia, by the subjects and methods of claims 1, 9, 11, 12, 13 and 14. Advantageous embodiments and further developments are subject to the dependent claims and can also be extracted from the following description and the figures.

First, the assembly for a gearbox for a wind turbine is specified. The assembly may already be part of the gearbox or can be assembled with further components to form a gearbox.

In at least one embodiment, the assembly for a gearbox for a wind turbine comprises a housing element, a rotational element, a bearing, a first connection feature for connecting the housing element to a connection element and a second connection feature for connecting the rotational element to the connection element. The rotational element is arranged rotatably with respect to the housing element by means of the bearing. At least one of the first and the second connection feature is configured to form a movable, form-fitting connection such that, when the housing element and the rotational element are connected to the connection element by means of the first and the second connection feature, a relative axial movement between the rotational element and the housing element is prevented but a relative rotation between the rotational element and the housing element is enabled.

The present invention is, inter alia, based on the recognition that, when the housing element and the rotational element are both connected to the connection element, the assembly can be transported or assembled without the risk of an axial displacement of the rotational element and corresponding damage to the bearing. At the same time, the housing element and the rotational element can still be rotated with respect to each other, which makes assembly and/or transportation easier. Particularly, the connections to the connection element do not have to be released if such a relative rotation becomes necessary during assembly or transportation.

The rotational element is arranged rotatably with respect to the housing element, i.e. the rotational element can be rotated around a rotational axis with respect to the housing element. For example, the rotational element is arranged to completely rotate, i.e. by 360° or more, around the rotational axis. The bearing may rotatably support the rotational element with respect to the housing element.

Here and in the following, an axial or longitudinal direction is defined as a direction parallel to the rotational axis. A radial direction is a direction perpendicular to the rotational axis and through the rotational axis. An inward radial direction points towards the rotational axis. An outward radial direction points away from the rotational axis. A rotational direction, also referred to as circumferential direction or azimuthal direction, is perpendicular to both the axial direction and the radial direction. In other words, the rotational direction is a direction around the rotational axis.

The housing element may surround at least a first portion of the rotational element and/or the bearing in radial direction, e.g. may completely surround the first portion of the rotational element and/or the bearing in radial direction. Thus, the housing element may be arranged radially outwards with respect to the first portion of the rotational element and/or the bearing and, when looking from outside of the housing element in radial inward direction, at least the first portion of the rotational element is covered by the housing element. For example, the bearing is completely covered by the housing element when viewed in radial inward direction.

A second portion of the rotational element may axially extend beyond the housing element so that this second portion is not covered by the housing element when viewed in radial inward direction. The second portion of the rotational element may be configured to be connected to a generator of the wind turbine or to a rotor of the wind turbine.

When the assembly is in its final position within the wind turbine and the wind turbine is operated, the housing element does not, e.g., rotate around the rotational axis. For example, with regard to a rotation around the rotational axis, the housing element is fixed with respect to a tower of the wind turbine, while the rotational element rotates around the rotational axis during normal operation of the wind turbine.

The housing element and/or the rotational element may be formed in one piece, e.g. of metal. Alternatively, the housing element and the rotational element may each be formed in a plurality of pieces.

The bearing may be a rolling bearing or a sliding bearing. In particular, the bearing may be a cylindrical roller bearing. For example, a bearing outer ring is fixed, e.g. axially, rotationally and/or radially fixed, with respect to the housing element and/or a bearing inner ring is fixed, e.g. axially, rotationally and/or radially fixed, with respect to the rotational element.

The assembly comprises a first and a second connection feature. A connection feature may also be referred to as connection means or a connection structure. A connection feature is, e.g., a recess, a groove, a protrusion, a hook or a bolt. A connection feature is a feature configured to interact, e.g. engage, with a corresponding connection feature to establish a connection.

The first connection feature is configured to connect the housing element to a connection element, or in other words, to form a connection between the housing element and the connection element. The expression "connection" herein particularly means a mechanical connection. "Connection" and "coupling" are herein understood to have the same meaning. The expression "connection" covers both, a direct or an indirect connection via one or more intermediate elements. In case of an indirect connection, the first connection feature may be configured to connect an intermediate element to the connection element, wherein said intermediate element is directly connected to the housing element or indirectly connected to the housing element via one or more additional intermediate elements. The intermediate elements may e.g. be a bearing cover and/or a bearing outer ring.

The first connection feature may be fixed, e.g. axially, rotationally and/or radially fixed, with respect to the housing element. The first connection feature may be part of the housing element, e.g. integrally formed with the housing element, or may be part of a separate element, i.e. intermediate element, of the assembly, like a bearing ring. In the second case, the separate element may be fixedly connected to the housing element.

The first connection feature is, e.g., configured to form a form-fitting connection and/or a force-fitting connection between the connection element and the housing element. A form-fitting connection (sometimes also called "positive connection" or "interlocking connection") is to be understood as a connection resulting from the meshing or interlocking between two connection partners such that a relative movement between the two connection partners is prevented (or limited) in at least one direction. The first connection feature may be configured to form a movable connection. This means that the connection allows a relative movement, e.g. rotation, between the connection element and the housing element.

The second connection feature is configured to connect the rotational element to the connection element or, in other words, to form a connection between the rotational element and the connection element. For example, the second connection feature is fixed, e.g. axially, rotationally and/or radially fixed, with respect to the rotational element. The second connection feature may be part of the rotational element, e.g. integrally formed with the rotational element, or may be part of a separate element, i.e. an intermediate element, of the assembly, like a bearing ring. In the second case, the second connection feature may be fixedly connected to the rotational element.

The second connection feature is, e.g., configured to form a form-fitting connection and/or a force-fitting connection between the connection element and the rotational element. The second connection feature may be configured to form a movable connection. This means that the connection allows a relative movement, e.g. rotation, between the connection element and the rotational element.

Two elements or features being rotationally, axially or radially fixed to each other means that the two elements or features are not movable with respect to each other in rotational, axial or radial direction, respectively. An element or feature fixedly connected to another element or feature is axially, rotationally and radially fixed to the other element or feature.

The skilled person understands that for forming the connections to the connection element by means of the first and second connection features, the connection element may comprise corresponding first and second connection features. The first connection feature and the corresponding first connection feature of the connection element may be configured to interact with each other, e.g. engage with each other, in order to connect the connection element to the housing element. Likewise, the second connection feature and the corresponding second connection feature of the connection element may be configured to interact with each other, e.g. engage with each other, in order to connect the connection element to the rotational element.

When the housing element and the rotational element are connected to the connection element by means of the first and the second connection features, the housing element and the rotational element are coupled to each other via the connection element. At least one of the first and the second connection feature is configured to form a movable, e.g. movable and form-fitting, connection such that a relative rotational movement between the rotational element and the housing element is still possible, whereas a relative axial movement between the rotational element and the housing element is prevented. For example, with the coupling via the connection element, an axial lock interface is formed between the rotational element and the housing element for blocking a relative axial movement between the rotational element and the housing element.

Under preventing or blocking a relative axial movement between the rotational element and the housing element, it is to be understood that the relative axial movement is limited to a small admissible amount (e.g. 0.5 mm or less) corresponding to the clearance between the connection element and the first and/or second connection feature forming the respective connection. Such a clearance is usually necessary for establishing and/or releasing the respective connection.

Without being coupled via the connection element, e.g. during normal operation of the wind turbine, the rotational element may be axially movable with respect to the housing element, e.g. by a predefined distance. Particularly, the bearing may comprise a certain axial clearance, i.e. the rotational element can move slightly axially with respect to the housing element within the limits of the axial clearance. The axial clearance may be at least 1 mm or at least 2 mm and/or at most 15 mm or at most 10 mm or at most 5 mm in both axial directions. By coupling the rotational element and the housing element via the connection element, e.g. during transportation of the assembly and/or during assembling of the wind turbine, it is possible to retain the rotational element in a certain desired axial position with respect to the housing element, e.g. in the center position of the axial clearance within the bearing. Thus, after decoupling the rotational element from the housing element, e.g. during normal operation of the wind turbine, the rotational element may move within the axial clearance starting from the desired axial position without contacting the bearing seats. Therefore, high axial loads on the bearing are avoided. The mentioned clearance is advantageous since it prevents the appearance of high axial loads during normal operation of the wind turbine.

According to at least one embodiment, at least one of the first and the second connection feature, e.g. the connection feature configured for the movable connection, is a groove extending or orientated in rotational direction, respectively. The groove may be configured to engage with a portion of the connection element. For example, when the connection element and the groove are engaged, a rotational movement of the connection element relative to and along the groove is enabled. An axial movement of the connection element relative to the groove is, e.g., prevented.

The groove extends along the rotational direction, i.e. circumferentially. For example, the groove extends over at least 60° or at least 120° or at least 180° or at least 240°. Alternatively, the groove may completely extend around the rotational axis. This means that the groove extends over 360°. With this, a complete rotation of the rotational element relative to the housing element when coupled via the connection element is possible.

The groove may be formed in or at an outer surface of the rotational element, e.g. in the second portion of the rotational element. The outer surface may face in radial outward direction. Alternatively, the groove may be part of an intermediate element which is connected to the rotational element. Alternatively, the groove may be formed at or in an outer surface of the housing element or may be part of an intermediate element which is connected to the housing element.

The portion of the connection element for engaging with the groove may be an edge portion of the connection element. When engaged, the portion of the connection element projects into the groove. In order to prevent an axial movement of the connection element relative to the groove, the width of the groove, measured in axial direction, may be chosen such that the portion of the connection element projecting into the groove may only move slightly in the axial direction before hitting against an axially facing wall of the groove when trying to move it in axial direction. For example, the width of the groove is adapted to the width of the portion of the connection element, e.g. may substantially be the same as the width of the portion of the connection element, e.g. such that the axial clearance between the groove and the portion of the connection element is limited to a small admissible amount (e.g. at most 0.5 mm).

By means of the groove, a form-fitting, movable connection between the connection element and the housing element or the rotational element, respectively, can be realized. In this way a rotational movement between the rotational element and the housing element can be enabled even when they are coupled to each other via the connection element. However, there are other possibilities for realizing the rotational movement. For example, at least one of the first and the second connection feature could be a ring-shaped protrusion configured to engage with a corresponding connection feature of the connection element. The corresponding connection feature could be a clamp structure for embracing the protrusion.

According to at least one embodiment, the groove is orientated in a radial direction. The portion of the connection element configured to engage with the groove thus engages radially with the groove. Particularly, the depth of the groove measured in radial direction is greater than the width of the groove, measured in axial direction. For example, the depth is at least 1.5-times or at least two times the width.

According to at least one embodiment, one of the first and second connection feature is configured to form a movable connection while the other one of the first and second connection feature is configured to form a fixed connection such that a relative movement between the connection element and one of the rotational element and the housing element is prevented. Said other one of the first and the second connection feature is thus configured to form a fixed connection between the connection element and the housing element or the rotational element, respectively. A fixed connection is to be understood as a connection in which a relative movement between the connecting partners in any direction is prevented. In the present invention, the fixed connection is preferably a releasable connection. However, the fixed connection may alternatively be a permanent connection. The movable connection may also be either a releasable or permanent connection.

According to at least one embodiment, at least one of the first and second connection feature is a hole, e.g. a bushing or a screw hole. The hole is, e.g., configured to engage with a bolt or a screw in order to connect the connection element to the housing element or the rotational element, respectively. The hole may comprise a thread for forming a threaded interface with a screw.

By means of the hole, a fixed connection between the connection element and the housing element or the rotational element, respectively, can be established.

By way of example, the first connection feature is a hole and the second connection feature is a groove or vice versa.

According to at least one embodiment, the first connection feature is part of an intermediate element which is in turn directly or indirectly connected to the housing element. In case of an indirect connection, the intermediate element is connected to the housing element via one or more additional intermediate elements. The intermediate element(s) may e.g. be a bearing cover and/or a bearing outer ring.

According to at least one embodiment, at least one of the first and the second connection features is configured to form a releasable connection. Thus, once established, the connection by means of the first and/or the second connection feature can be released without destruction. Particularly, the connection established by means of the first and/or second connection feature may be a reversible connection which can be formed and released several times. For example, both, the first and the second connection feature, are configured to form a releasable connection.

For example, when the at least one releasable connection is released, a relative axial movement between the rotational element and the housing element is enabled or is at least no longer blocked by the connection element.

According to at least one embodiment, the first and the second connection features are accessible from outside of the housing element such that the connection element is connectable to the housing element and the rotational element by means of the connection features from outside of the housing element. For this purpose, the first connection feature and the second connection feature may both be exposed, e.g. not covered by the housing element and/or the rotational element. For example, the first connection feature is arranged at an outer surface of the housing element and the second connection feature is arranged at an outer surface of the rotational element, wherein the second connection feature is located in the second portion of the rotational element not covered by the housing element.

With the connection element attachable from outside of the housing element, the danger of parts of the connection element falling into the interior of the gearbox and altering the operation of the gearbox is reduced. Furthermore, as the connection is attachable from outside of the housing element, the connection element can be attached to and detached from the gearbox in a simple and safe way.

According to at least one embodiment, the first connection feature is arranged outside of the housing element, e.g. at an outer surface of the housing element.

According to at least one embodiment, the second connection feature is arranged inside of the housing element. The housing element may comprise a slot through which the connection element can be inserted to reach the second connection feature. For example, the slot may extend in a radial direction through the housing element such that the connection element is insertable in radial direction in order to reach the second connection feature.

In this embodiment, the connection element is attachable from outside of the housing element. The connection element can thus be attached to and detached from the assembly in a simple and safe way. This embodiment is particularly advantageous for cases in which there is little space available at the second portion of the rotational element (i.e. at the portion of the rotational element not covered by the housing element).

According to at least one embodiment, the rotational element is a shaft, e.g. one of a gearbox input shaft and a gearbox output shaft. The gearbox input shaft corresponds to the shaft which is typically directly or indirectly connected to the rotor of the wind turbine, while the gearbox output shaft is typically directly or indirectly connected to the generator of the wind turbine.

According to at least one embodiment, the housing element is a gearbox housing. Thus, the housing element may be the housing of the gearbox of which the assembly is a part. Alternatively, the housing element may be a part of the gearbox housing.

According to at least one embodiment, the assembly is for a planetary gearbox.

According to at least one embodiment, the rotational element is a planet carrier. The planet carrier is, e.g., configured to carry planet gear wheels arranged around a sun gear wheel. For example, the planet carrier is a first stage planet carrier. Thus, the planet carrier is configured to be directly coupled to a rotor of the wind turbine without an intermediate element for changing the rotational speed. The planet carrier may alternatively be indirectly coupled to the rotor of the wind turbine.

According to at least one embodiment, the first connection feature is part of or formed in a bearing cover, e.g. the bearing cover of the bearing between the rotational element and the housing element, said bearing enabling the rotational movement between the two elements.

The assembly may comprise several first and/or second connection features. All details disclosed for one first connection feature and/or one second connection feature are also disclosed for all other first or second connection features, respectively.

Next, the arrangement is specified.

In at least one embodiment, the arrangement comprises an assembly according to any one of the embodiments described herein. Furthermore, the arrangement comprises a connection element. The connection element may be the connection element as described above. The connection element is connected to the housing element and the rotational element by means of the first and the second connection feature. The connections are such that a relative axial movement between the rotational element and the housing element is prevented but a relative rotation between the rotational element and the housing element is enabled.

For example, the first connection feature interacts, e.g. engages, with a corresponding first connection feature of the connection element for establishing the connection between the housing element and the connection element. The second connection feature may interact, e.g. engage, with a corresponding second connection feature of the connection element for establishing the connection between the rotational element and the connection element.

For example, one of the first and the second corresponding connection feature of the connection element may be a portion or protrusion of the connection element configured to engage with and project into the first or second connection feature in the form of a groove. The other corresponding connection feature of the connection element may be a hole or a bolt. In the case of the other corresponding connection feature being a hole, a screw may be guided through this hole in the connection element and screwed into the first or second connection feature realized as another hole in order to connect the connection element to the housing element or the rotational element, respectively. In the case that the other corresponding connection feature is a bolt, the bolt may project into the first or second connection feature being a hole in order to connect the connection element to the housing element or the rotational element, respectively.

According to at least one embodiment, the connection element is a plate. The plate may have a ring shape or a ring segment shape. For example, the ring segment forms at most 50 % of a complete ring, i.e. it extends over at most 180°. For example, the ring segment forms at least 10 % or at least 30 % of a complete ring. Particularly, the connection element may be a plate-like, ring segment shaped element.

The plate may be made of metal. The plate may alternatively be made of other materials.

The plate may comprise at least one hole as a corresponding connection feature. The hole may completely extend through the plate and over the whole thickness of the plate. An edge portion of the plate may be inserted into the rotationally extending groove.

When connected to the housing element and the rotational element, an axial extension of the connection element may be smaller than a radial extension and/or than a circumferential extension of the connection element. The circumferential extension may be larger than the radial extension.

The connection element may comprise several first and/or second corresponding connection features and all details disclosed in connection with one first and/or second corresponding connection feature are disclosed for all other first or second corresponding connection features, respectively.

Next, the kit is specified.

In at least one embodiment, the kit comprises an assembly according to any one of the embodiments described herein. Furthermore, the kit comprises a connection element, e.g. the connection element described above. The connection element is configured to be connected to the housing element and the rotational element by means of the first and the second connection feature.

The difference between the arrangement and the kit, in particular, is that in the arrangement the connection element is connected to the assembly by means of the first and the second connection feature whereas, for the kit, the connection element may be separated from the assembly, i.e. not connected to the assembly. However, the arrangement can be formed by connecting the connection element to the assembly. Therefore, all features disclosed in connection with the arrangement are also disclosed for the kit and vice versa.

Next, a gearbox is specified.

In at least one embodiment, the gearbox comprises the assembly according to any one of the embodiments described herein. The gearbox may be a single-stage or a multi-stage gearbox. The gearbox may be a planetary gearbox such as described above. Such a planetary gearbox may comprise further components, such as planet gear wheels and a sun gear wheel engaged with the planet gear wheels. The planet gear wheels may be arranged on the planet carrier. The gearbox may alternatively be of another type, such as a spur gearbox. Alternatively, in case of a multi-stage gearbox, the gearbox may comprise one or several planetary stages as well as one spur gear stage.

Next, the method for transporting an assembly for a gearbox is specified. The assembly may be the assembly described herein. Therefore, all feature described in connection with the assembly are also disclosed for the method and vice versa.

In at least one embodiment, the method comprises a step in which the assembly according to any one of the embodiments described herein is provided. In case the rotational element of the assembly is not already in the desired axial position with respect to the housing element, the step of providing the assembly may be followed by a step of positioning the rotational element in the desired axial position relative to the housing element. After that, in a further step, the housing element of the assembly is connected to a connection element by means of the first connection feature and the rotational element is connected to the connection element by means of the second connection feature. Afterwards, the assembly connected with the connection element is transported.

Of course, the above said includes the case that a whole gearbox with an assembly is provided and then the gearbox connected with the connection element is transported.

The desired axial position of the rotational element corresponds to the axial position in which the rotational element is retained during the transportation of the assembly. This desired axial position may e.g. correspond to the center position of the axial clearance within the bearing which rotatably supports the rotational element with respect to the housing element. In particular, the desired axial position is selected in such a way that after releasing at least one of the connections between the connection element and the housing element and between the connection element and the rotational element, e.g. during normal operation of the wind turbine, the rotational element may axially move within the axial clearance of the bearing without contacting the bearing seats.

The connection element used for performing the method may be the connection element described above. Thus, when connected, the arrangement described above may be formed so that all features disclosed for the arrangement are also disclosed for the method and vice versa. The assembly used for performing the method may already be assembled to a gearbox, i.e. may already be part of a gearbox.

Transporting the assembly with the connected connection element may include one or more of: transporting it on a vehicle, such as a train, a ship and/or a truck, lifting and/or dropping using a crane.

During transportation, the bearing between the housing element and the rotational element is axially unloaded due to the connection to the connection element.

Next, the method for assembling a wind turbine is specified.

In at least one embodiment, the method comprises a step in which an arrangement according to any one of the embodiments described herein is provided. In a further step, the arrangement is brought into a desired position within the wind turbine. In case the gearbox is not already fully assembled before performing the present method, this step may include assembling the assembly with further components to form the gearbox. The desired position may, in particular, be a position in which the assembly is mounted in a nacelle on top of a tower of the wind turbine. Moreover, in the desired position, the assembly, particularly the rotational element, may be connected to a generator or a rotor of the wind turbine. In a further step, at least one of the connections between the connection element and the housing element and between the connection element and the rotational element formed by means of the first and the second connection feature is released. This step is preferably performed after the arrangement has been brought into the desired position within the wind turbine.

For example, both connections formed by means of the first and the second connection feature are released. The connection element may then be detached or removed from the wind turbine. For example, the connection element can then be used for transporting a further assembly and/or for assembling a further wind turbine.

Hereinafter, the assembly for a gearbox for a wind turbine, the arrangement, the gearbox, the wind turbine and the methods will be explained in more detail with reference to the drawings on the basis of exemplary embodiments. The accompanying figures are included to provide a further understanding. In the figures, same, similar or similar acting elements may be referenced by the same reference signs. It is to be understood that the embodiments shown in the figures are illustrative representations and are not necessarily drawn to scale. In so far as elements or components correspond to one another in terms of their function in different figures, the description thereof is not repeated for each of the following figures. For the sake of clarity, elements might not appear with corresponding reference symbols in all figures.
Figure 1 shows a schematic view of a wind turbine,
Figure 2 shows an exemplary embodiment of the arrangement comprising an exemplary embodiment of the assembly or gearbox, respectively, in cross-sectional view,
Figure 3 shows the arrangement of figure 2 in perspective view,
Figure 4 shows a second exemplary embodiment of the arrangement comprising a second exemplary embodiment of the assembly or gearbox, respectively, in cross-sectional view,
Figure 5 shows a flowchart of an exemplary embodiment of the method for transporting an assembly for a gearbox, and
Figure 6 shows a flowchart of an exemplary embodiment of the method for assembling a wind turbine.

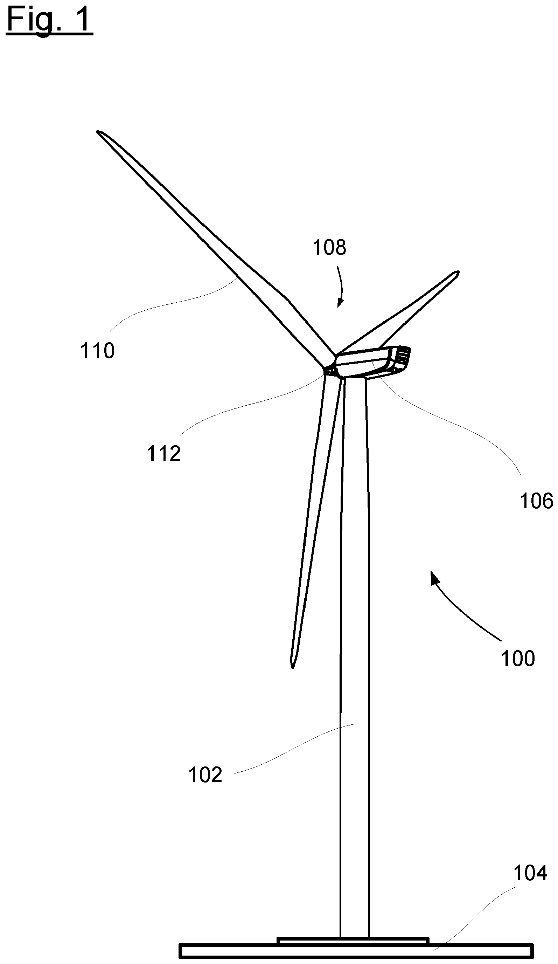

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a gearbox (not shown). The rotor 108 comprises one or more (wind turbine) rotor blades 110, which are arranged on a rotor hub 112, said rotor hub 112 being connected to a rotor shaft (not shown).

During operation, the rotor 108 is set in rotation by an air flow, for example wind. This rotational movement is transmitted to the generator via the rotor shaft and a gearbox. The generator converts the mechanical energy of the rotor 108 into electrical energy.

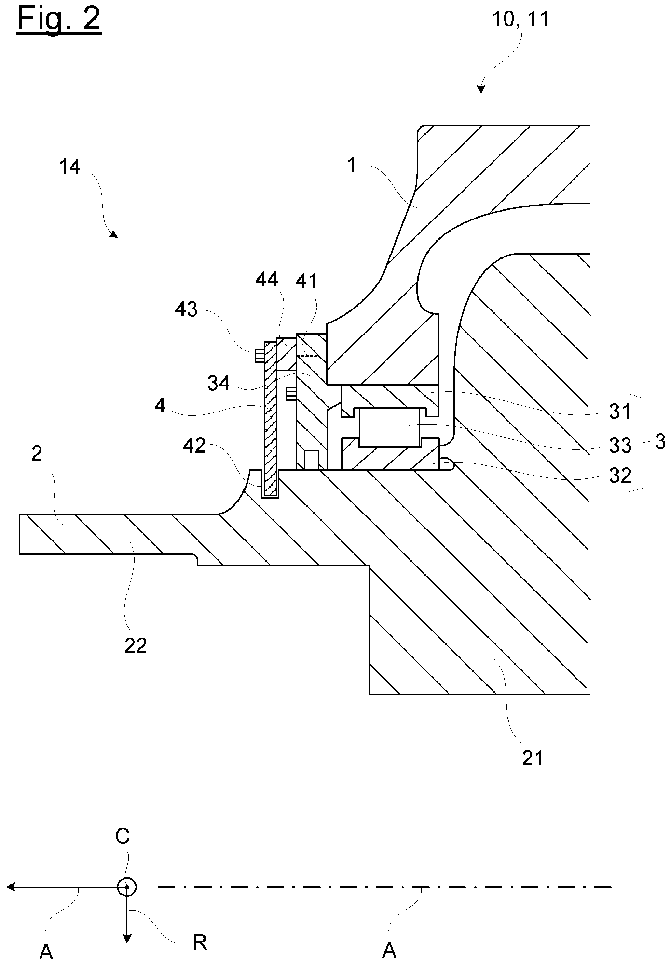

Figure 2 shows an exemplary embodiment of the arrangement 14 in a cross-sectional view. The arrangement 14 comprises a gearbox 11, e.g. the gearbox of the wind turbine of figure 1 in a cross-sectional view. The gearbox 11 comprises an assembly 10 which is a subunit of the gearbox 11. The assembly 10 has a rotational element 2 in form of a gearbox input shaft 2. The gearbox input shaft 2 constitutes a planet carrier 2. Furthermore, the assembly comprises a housing element 1 in form of a gearbox housing 1. The gearbox 11 is, e.g., a planetary gearbox and may comprise planet gear wheels and a sun gear wheel, which are not shown. The planet carrier 2 is e.g. connected or connectable to the rotor shaft via a shrink disk (not shown).

The planet carrier 2 is rotatably arranged with respect to the gearbox housing 1 by means of a bearing 3. The bearing 3 comprises a bearing outer ring 31, which is connected, e.g. fixedly connected, to the gearbox housing 1, and a bearing inner ring 32 which is connected, e.g. fixedly connected, to the planet carrier 2. Between the bearing inner ring 32 and the bearing outer ring 31, rolling elements 33, e.g. in the form of cylindrical rolling elements, are arranged. Furthermore, a bearing cover 34 is fixedly connected to the gearbox housing 1 via the bearing outer ring 31. The bearing 3 has a certain axial clearance which, during normal operation of the gearbox 11, allows an axial movement of the planet carrier 2 with respect to the gearbox housing 1, e.g. 2.5 mm in both axial direction. However, as will be further described below, this axial movement is prevented by the connection to a connection element 4.

Figure 2 also shows the rotational axis A around which the planet carrier 2 can be rotated with respect to the gearbox housing 1. A direction parallel to this rotational axis A is herein called axial direction or longitudinal direction. The radial direction R is perpendicular to the rotational axis A and crosses the rotational axis A. The rotational direction C, also referred to as circumferential or azimuthal direction, points into the paper plane or out of the paper plane.

As can be seen in figure 2, a first portion 21 of the planet carrier 2 is radially surrounded by the gearbox housing 1 so that, when viewed in radial inward direction, the gearbox housing 1 covers this first portion 21 of the planet carrier 2. A second portion 22 of the planet carrier 2 axially extends beyond the gearbox housing 1. This second portion 22 is, e.g., foreseen for being connected to the rotor shaft of the wind turbine.

In the arrangement 14 of figure 2, a connection element 4 in the form of a metal plate 4 is connected to the assembly 10 or gearbox 11, respectively. For this purpose, the connection element 4 is connected to the gearbox housing 1 by means of a first connection feature 41. The first connection feature 41 is a screw hole in the bearing cover 34. The connection element 4 comprises a corresponding first connection feature in the form of a hole which is rotationally and radially aligned with the screw hole 41. A screw 43 is guided through the hole in the connection element 4 and is screwed into the screw hole 41 of the bearing cover 34. In this way, the connection element 4 is fixedly connected to the gearbox housing 1. As can be further seen in figure 2, the screw 43 also goes through an element 44 located between the bearing cover 34 and the connection element 4. This element 44 is a separate element with specific dimensions, such that the exact axial position of the connection element 4 with respect to the gearbox housing 1 may be set as desired. The element 44 may be a washer. In an alternative embodiment, the element 44 may be an integral part of the bearing cover 34 (not shown). a washer is used between the bearing cover 34 and the connection element 4 through which the screw 43 is guided.

Furthermore, the connection element 4 is connected to the planet carrier 2 by means of a second connection feature 42. The second connection feature 42 is a groove integrated in an outer surface of the planet carrier 2. In an alternative embodiment, the groove may be integrated in a separate (intermediate) element which is connected to the planet carrier 2, e.g. via a screw connection (not shown). A corresponding second connection feature of the connection element 4 is a portion of the connection element 4 projecting into the groove 42.

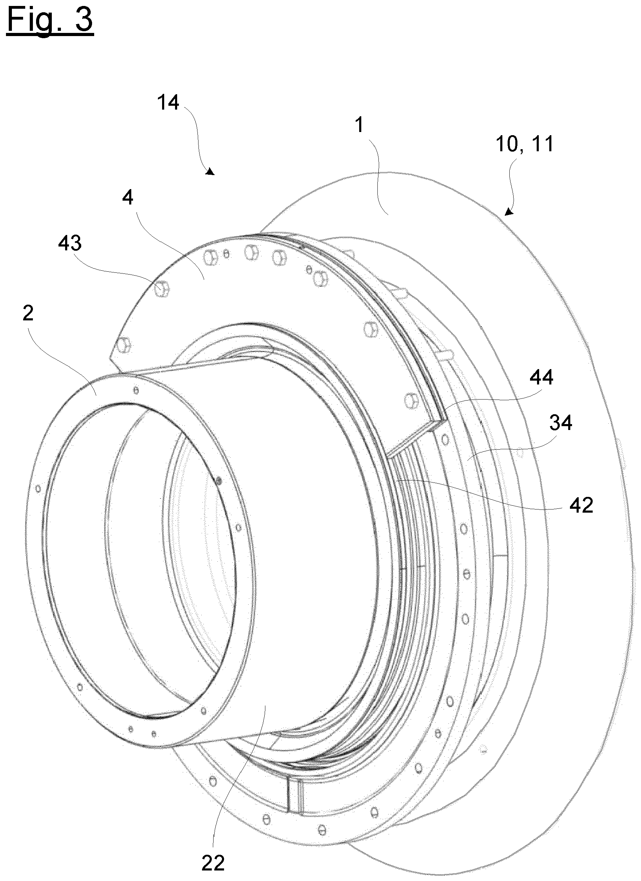

The groove 42 extends in rotational direction. This can be better seen in figure 3. Here the groove 42 extends completely around the rotational axis A. It can be further seen in figure 3 that the connection element 4 is actually realized as a ring segment shaped, plate-like element. It is connected to the gearbox housing 1 by a plurality of screws 43 extending into associated screw holes 41 in the bearing cover 34.

The connection between the connection element 4 and the gearbox housing 1 by means of the screws 43 screwed into the holes 41 is such that the connection element 4 is axially, rotationally and radially fixed with respect to the gearbox housing 1, i.e. is a fixed connection.

The form-fitting connection between the connection element 4 and the planet carrier 2 by means of the engagement between the connection element 4 and the groove 42 is such that a relative axial movement between the connection element 4 and the planet carrier 2 is prevented, i.e. a relative axial movement is limited to a small admissible amount defined by the axial clearance between the groove 42 and the connection element 4. Consequently, a relative axial movement between the planet carrier 2 and the gearbox housing 1 is prevented. However, due to the extension of the groove 42 in rotational direction completely around the rotational axis A, the connection between the connection element 4 and the planet carrier 2 is movable, namely rotatable such that the connection element 4 engaged with the groove 42 can be moved along the groove 42. Consequently, a relative rotation between the planet carrier 2 and the gearbox housing 1 is enabled.

The connection between the gearbox housing 1 and the planet carrier 2 via the connection element 4 is particularly advantageous during transportation and assembly of the assembly 10 / gearbox 11 since it prevents axial displacement of the planet carrier 2 with respect to the gearbox housing 1 and at the same time allows the planet carrier 2 to be rotated with respect to the gearbox housing 1 when this is needed.

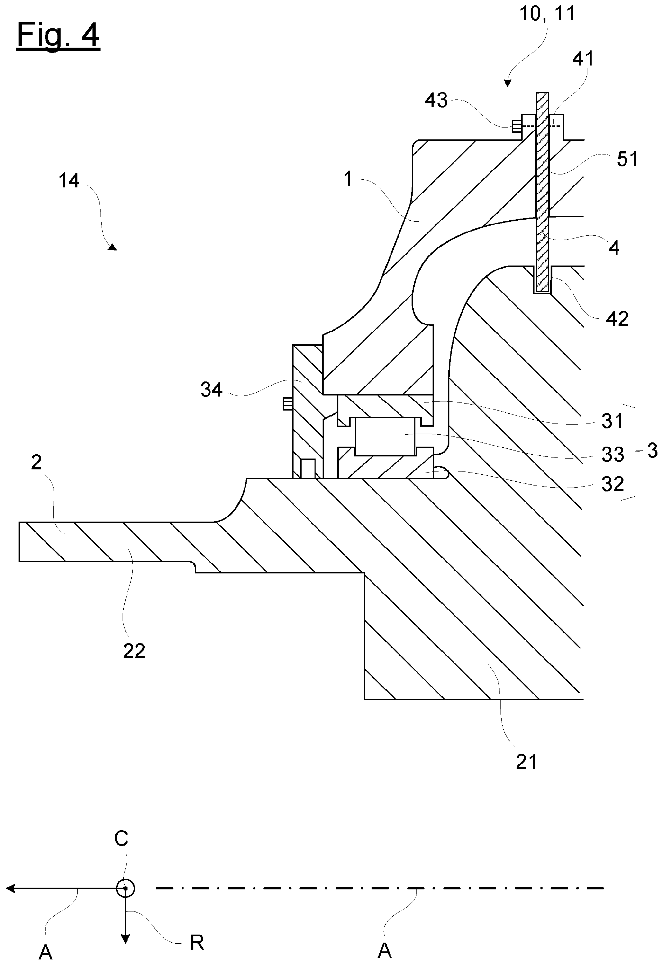

Figure 4 shows a second exemplary embodiment corresponding to an alternative of the exemplary embodiment shown in figures 2 and 3. The second exemplary embodiment has many similarities with the exemplary embodiment shown in figures 2 and 3, but differs from the latter in that the gearbox housing 1 comprises a slot 51 through which the connection element 4 can be inserted to reach and engage into the groove 42 of the planet carrier 2, in particular in a radial direction. The groove 42 is integrated in the first portion 21 of the planet carrier 2 which is placed in an interior of the gearbox housing 1. The gearbox housing 1 comprises a screw hole 41 through which a screw 43 is inserted in order to fixedly connect the gearbox housing 1 to the connection element 4. Alternatively, other types of connections such as a locking pin connection may be used to fixedly connect the gearbox housing 1 to the connection element 4 (not shown).

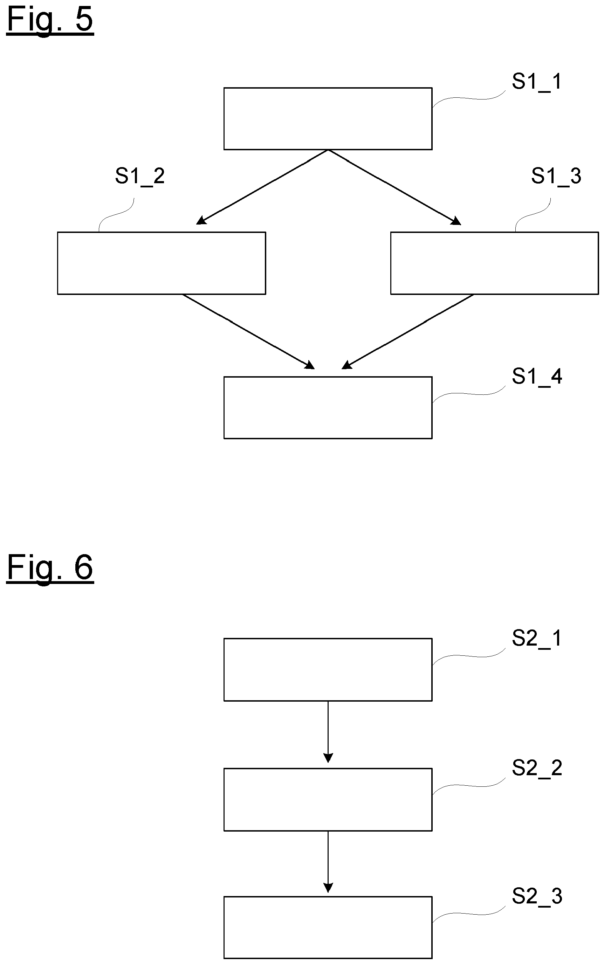

Figure 5 shows an exemplary embodiment of the method for transporting a gearbox or an assembly for a gearbox, respectively, on the basis of a flowchart. In a step S1_1, the gearbox 11 with the assembly 10 of figures 2 and 3 or with the assembly 10 of figure 4 is provided. In case the planet carrier 2 of the assembly is not already in the desired axial position with respect to the gearbox housing 1, a next step may comprise the positioning of the planet carrier 2 in the desired axial position. The connection element 4 is not yet connected to the gearbox housing 1 and the planet carrier 2. After completing step S1_1 and possibly after axially positioning the planet carrier 2, a step S1_2 is executed in which the gearbox housing 1 is connected to the connection element 4 by means of the first connection feature 41. In a step S1_3, the planet carrier 2 is connected to the connection element 4 by means of the second connection feature 42. Steps S1_2 and S1_3 may either be performed at the same time or one after the other. The result is the arrangement 14 of figures 2 and 3 or figure 4. In a subsequent step S1_4, the arrangement 14 is transported, e.g. by train or ship or truck. The arrangement 14 is, e.g., transported from a place of manufacturing of the gearbox 11, respectively, to a place where the wind turbine is to be installed. Due to the connection to the connection element 4, axial movements of the planet carrier 2 with respect to the gearbox housing 1 are prevented.

An exemplary embodiment for assembling a wind turbine, e.g. the wind turbine of figure 1, is illustrated in figure 6 on the basis of a flowchart. In a step S2_1, the arrangement 14 of figures 2 and 3 is provided. The arrangement 14 is then brought into a desired position, e.g. on the tip of the tower 102 (step S2_2). Then, in a step S2_3, the connection between the connection element 4 and gearbox housing 1 formed by means of the first connection feature 41 and the connection between the connection element 4 and the planet carrier 2 formed by means of the second connection feature 42 are released. Since the connection element 4 and the connection features 41, 42, are accessible from outside of the gearbox housing 1, the connection element 4 can now be easily removed and can, e.g., be used for another assembly of a gearbox. Moreover, if the connection element 4 would break during transportation, the remnants of the connection element 4 would not fall into the interior of the gearbox 11 so that the danger of destruction of elements of the gearbox 11 is reduced.

In this exemplary embodiment for assembling a wind turbine illustrated in figure 6, step S2_1 may alternatively comprise providing the arrangement 14 of figure 4. In that case, the first connection feature 41 and the second connection feature 42 can be released in a simple and safe way and the connection element 4 can easily be removed, also in case there is little space available at the second portion 22 of the planet carrier 2.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference signs

- 1: housing element
- 2: rotational element
- 3: bearing
- 4: connection element
- 10: assembly
- 11: gearbox
- 14: arrangement
- 21: first portion
- 22: second portion
- 31: bearing outer ring
- 32: bearing inner ring
- 33: rollings
- 34: bearing cover
- 41: first connection feature
- 42: second connection feature
- 44: element
- 51: slot
- 100: wind turbine
- 102: tower
- 104: foundation
- 106: nacelle
- 108: rotor
- 110: blade
- 112: rotor hub
- A: rotational axis
- R: radial direction
- C: rotational direction
- S1_1 to S1_4: method steps
- S2_1 to S1_3: method steps

## Claims

1. Assembly (10) for a gearbox (11) for a wind turbine (100) comprising
- a housing element (1),
- a rotational element (2),
- a bearing (3),
- a first connection feature (41) for connecting the housing element (1) to a connection element (4), and
- a second connection feature (42) for connecting the rotational element (2) to the connection element (4),
wherein
- the rotational element (2) is arranged rotatably with respect to the housing element (1) by means of the bearing (3),
- at least one of the first (41) and the second (42) connection feature is configured to form a movable, form-fitting connection such that, when the housing element (1) and the rotational element (2) are connected to the connection element (4) by means of the first (41) and second (42) connection feature, a relative axial movement between the rotational element (2) and the housing element (1) is prevented but a relative rotation between the rotational element (2) and the housing element (1) is enabled.

2. The assembly (10) according to claim 1, wherein
- at least one of the first (41) and the second (42) connection feature is a groove extending in rotational direction and is configured to engage with a portion of the connection element (4) such that a rotational movement of the connection element (4) relative to and along the groove is enabled and an axial movement of the connection element (4) relative to the groove is prevented.

3. The assembly (10) according to any one of the preceding claims, wherein
- one of the first (41) and the second (42) connection feature is configured to form a fixed connection such that a relative movement between the connection element (4) and one of the rotational element (2) and the housing element (1) is prevented.

4. The assembly (10) according to any one of the preceding claims, wherein
- at least one of the first (41) and second (42) connection features is configured to form a releasable connection such that, when the connection is released, a relative axial movement between the rotational element (2) and the housing element (1) is enabled.

5. The assembly (10) according to any one of the preceding claims, wherein
- the first (41) and the second (42) connection features are accessible from outside of the housing element (1) such that the connection element (4) is connectable to the housing element (1) and the rotational element (2) by means of the connection features (41, 42) from outside of the housing element (1).

6. The assembly (10) according to any of claims 1 to 5, wherein
- the first connection feature (41) is arranged outside of the housing element (1),
- the second connection feature (42) is arranged inside of the housing element (1),
- the housing element (1) comprises a slot (51) through which the connection element (4) can be inserted to reach the second connection feature (42).

7. The assembly (10) according to any one of the preceding claims, wherein
- the rotational element (2) is a shaft, in particular a gearbox input shaft or a gearbox output shaft,
- the housing element (1) is a gearbox housing or a part of a gearbox housing.

8. The assembly (10) according to any one of the preceding claims, wherein
- the assembly (10) is for a planetary gearbox,
- the rotational element (2) is a planet carrier, in particular a first stage planet carrier.

9. Arrangement (14) comprising
- an assembly (10) according to any one of claims 1 to 8,
- a connection element (4), wherein
- the connection element (4) is connected to the housing element (1) and the rotational element (2) by means of the first (41) and the second (42) connection feature such that
- a relative axial movement between the rotational element (2) and the housing element (1) is prevented but a relative rotation between the rotational element (2) and the housing element (1) is enabled.

10. The arrangement (14) according to claim 9, wherein
- the connection element (4) is a plate having a ring shape or a ring segment shape.

11. Kit comprising
- an assembly (10) according to any one of claims 1 to 8,
- a connection element (4) for being connected to the housing element (1) and to the rotational element (2) by means of the first (41) and the second (42) connection feature.

12. Gearbox (11) for a wind turbine (100) comprising
- the assembly (10) according to any of claims 1 to 8.

13. Method for transporting an assembly (10) for a gearbox (11) comprising
- providing the assembly (10) according to any of claims 1 to 8,
- connecting the housing element (1) to a connection element (4) by means of the first connection feature (41),
- connecting the rotational element (2) to the connection element (4) by means of the second connection feature (42),
- transporting the assembly (10) with the connected connection element (4).

14. Method for assembling a wind turbine (100), comprising
- providing an arrangement (14) according to claim 9 or 10,
- bringing the arrangement (14) into a desired position within the wind turbine (100),
- releasing at least one of the connections between the connection element (4) and the housing element (1) and between the connection element (4) and the rotational element (2) formed by means of the first (41) and the second (42) connection feature.
